# EUROPEAN PATENT APPLICATION

(11) **EP 2 151 749 A2**
(43) Date of publication of application: **10.02.2010**
(21) Application number: 09166644.6
(22) Date of filing: 28.07.2009
(51) Int. Cl.: G06F 3/12, G07G 5/00, G06K 15/02

(54) **Printing system, printing device, control method for a printing device, and a control program**

(30) Priority: 29.07.2008 JP 2008194815; 29.05.2009 JP 2009130458
(71) Applicant: Seiko Epson Corporation, Shinjuku-ku Tokyo 163-0811 (JP)
(72) Inventor: Koakutsu, Naohiko, Nagano 392-8502 (JP)
(74) Representative: MERH-IP Matias Erny Reichl Hoffmann

(57) **Abstract**

A printer (14) has two connection terminals (15-1,15-2) enabling connecting to an external host computer (11) using a daisy chain connection, and the printer (14) determines if an external device such as a host computer (11) or another printer (17) is connected to the connection terminals (15-1,15-2). and based on the result of said determination, the printer (14) selects and prints from among specific plural types of print data (31,51) output from the host computer (11) through the daisy chain connection, the print data (31) of the type previously correlated to the connection status of the connection terminals (15-1;15-2). Accordingly, without the requirement to reserve printers of plural different types in preparation for an equipment failure, printing as desired can be quickly resumed by simply connectinga replacement printer according to the invention.

## Description

### BACKGROUND OF THE INVENTION

### 1. Technical Field

The present invention relates to a printing system, printing device, and to a control method and a control program for a printing device, and relates more particularly to a printing device that is connected in a daisy chain to a host computer and prints specific print data, and to a control method and a control program for the printing device.

### 2. Related Art

Point-of-sale systems (POS system) are commonly used in retail stores, for example, for sales and inventory management. See, for example, Japanese Unexamined Patent Appl. Pub. JP-A-2003-317152.

In some POS systems two printers are connected in a daisy chain to the host computer, receipt paper for printing receipts is loaded as the printing paper in one printer and coupon paper for printing coupons is loaded in the other printer.

When configuring this type of system, it is necessary to preset each daisy chained printer to print receipts or print coupons.

One means of accomplishing this requires preparing a dedicated printer for each type of print data.

A second means of accomplishing this uses identical printers, but requires telling each printer what kind of print data to print by setting a DIP switch, for example.

Users of POS system according to the related art described above thus need to have a spare printer on reserve in case any one of the printers fails. In addition to being expensive, a problem with the first method of the prior art described above requires users with large POS systems to also have a large amount of storage space to store the spare printers.

A problem with the second method of the prior art described above is that the user must identify what kind of print data was printed by the printer that failed and reset the DIP switch of the replacement printer accordingly, and this is tedious and time-consuming.

### SUMMARY

An object of the present invention is to provide a printing device, and a control method and a control program for a printing device for solving the above-mentioned problems of the prior art.

To solve the foregoing problems of the prior art, according to the present invention, a printing device, and a control method and a control program for a printing device according to the independent claims is proposed. According to the invention, printing as desired can be enabled by simply connecting a printer, thus eliminating the need to have ready a plurality of different types of printers in preparation for a printer failure.

According to a first aspect of the invention is a printing device which comprises two connection terminals, wherein each of the two connection terminals enables connection to an external device such as a host computer or another printing device using a daisy chain connection; wherein the printing device is configured to determine if an external device such as the host device or the other printing device is connected to the connection terminals for determining a connection status of the connection terminals; and wherein the printing device is configured to select from among specific plural types of print data output from the host computer through the daisy chain connection the print data of the type of print data previously correlated to the connection status of the connection terminals based on the result of said determination, i.e. based on the determined connection status of the connection terminals.

Because the printing device according to this first aspect of the invention determines if an external device is connected to the connection terminals, and based on the result of said determination selects and prints from among specific plural types of print data output from the host computer through the daisy chain connection the print data of the type of print data previously correlated to the connection status of the connection terminals, the printer can print based on the type of print data correlated to the connection status of the connection terminals by simply connecting a printing device to one of the connection terminals. Here, a connection status of the connection terminals may correspond for example to the connection status where only one of the two connection terminals is connected to an external device such as a host computer or another printing device or the connection status where two external devices are respectively connected to the two connection terminals e.g. a host computer and another printing device.

As a result, because one printer can be simply replaced with another printer of the same type when the one printer fails or maintenance is required, the user's job is made easier and replacing a printer is easier.

When external devices such as a host computer or another printing device are respectively connected to the two connection terminals and the other printing device which is connected to either one of the connection terminals is determined to be not functioning, the printing device preferably prints based on the plural types of print data.

Then, because the printing device that has not failed automatically prints all print data, the user can print the print data that is assigned to the printing device that failed.

When external devices such as a host computer or another printing device are respectively connected to the two connection terminals and the other printing device which is connected to either one of the connection terminals is determined to be not functioning, the printing device preferably reports to the host computer that the print data of the type correlated to the other printing device cannot be printed.

Then, when one of the printers is not functioning, this enables the user operating the host computer to know immediately when a problem occurs so that appropriate action can be taken.

Further preferably, the plural types of print data comprise at least receipt print data for receipt printing and coupon print data for coupon printing.

Then, without requiring other explicit settings, the user can cause the printing devices to function according to how the printers are connected as a printer for printing receipts or a printer for printing coupons.

A printing device according to another aspect of the invention comprises two connection terminals enabling a daisy chain connection; wherein the printing device is configured to determine if an external host computer is connected through one of the connection terminals and another printing device is connected to another connection terminal; and wherein the printing device is configured to print, based on the result of said determination, based on one of at least two specific types of print data input from the host computer.

Because the printing device is connected through either one of the connection terminals to an external host computer, and determines if another printing device is connected to the other connection terminal, and prints based on one of at least two specific types of print data input from the host computer based on the result of said determination, the printing device can print based on the one type of print data conforming to the connection status by connecting the connection terminals in the same way. As a result, because it is only necessary to connect a replacement printer in the same way as the failed printer it is replacing when a printer fails, printing can proceed as desired while making the user's job easier and facilitating recovery from equipment failure.

Furthermore, the printing device according to one of the above-mentioned aspects preferably further comprises a connection status determination unit for determining based on a signal level of a signal line in the connection terminal if another printing device is connected to one of the other terminals. In particular, the connection status determination unit is preferably configured to determine the connection status of the connection terminals.

Accordingly, reliably determining if the printing device is connected by simply connecting the printing device can be enabled because the connection status determination unit determines based on the signal level of a signal in the connection terminal if another printing device is connected to one of the other terminals.

Further preferably, the two types of print data are at least receipt print data for receipt printing and coupon print data for coupon printing.

The printing device can thus function as a printer for printing receipts or a printer for printing coupons accordingto how the printing device is connected.

A printing device according to another aspect of the invention comprises two connection terminals, wherein the printing device is configured to receive data from an external host device through either one of the connection terminals, herein the printing device is configured to send data to an external subordinate device through the other connection terminal, herein the printing device is configured to determine if the subordinate device is connected to the other connection terminal based on a reception signal at the other connection terminal, and herein the printing device is configured to selectively print data received from the host device if connection of the subordinate device is detected.

When a subordinate device is connected, this aspect of the invention enables separating and printing the received data on different devices.

The printing device preferably selects and sends specific data from the data received from the host device to the subordinate device if connection of the subordinate device is detected.

When a subordinate device is connected, separating the received data for printing on the subordinate device can be enabled.

Preferably, the printing device prints based on the data received from the host device if it determines that a subordinate device is not connected.

Then, printing all of the received data when a subordinate device is not connected can be enabled.

Further preferably, both the host device and subordinate device are printing devices of the same type, preferably a printing device according to at least one of the aspects as described in the above.

Accordingly, printers of the same type can be used, so that replacing and adding printers is made easier.

Another aspect of the invention is a control method for a printing device which comprises two connection terminals, wherein each of the two connection terminals enables connection to an external device such as a host computer or another printing device using a daisy chain connection, the control method including: a determination step of determining if an external device such as the host device or the other printing device is connected to the connection terminals for determining a connection status of the connection terminals; and a printing step of selecting from among specific plural types of print data output from the host computer through the daisy chain connection the print data of the type of print data previously correlated to the connection status of the connection terminals based on the determined connection status and printing based on the selected print data of the type of print data previously correlated to the connection status of the connection terminals.

Because the printing device according to this aspect of the invention determines if an external device is connected to the connection terminals, and based on the result of said determination selects and prints from among specific plural types of print data output from the host computer through the daisy chain connection the print data of the type previously correlated to the connection status of the connection terminal, the printer can print based on the type of print data correlated to the connection status of the connection terminals by simply connecting a printing device to a connection terminal.

Further preferably, the control method for a printing device also has a malfunction determination step, if it is determined that external devices such as a host computer or another printing device are respectively connected to the two connection terminals, of determining if the other printing device connected to either one of the connection terminals is not functioning, and in the printing step printing is based on the plural types of print data when the other printing device is determined to be not functioning.

Then, because the printing device that has not failed can automatically print all print data, the user can print the print data that is assigned to the printing device that failed.

The control method may also have a malfunction determination step, if it is determined that external devices such as a host computer or another printing device are respectively connected to the two connection terminals, of determining if the other printing device connected to either one of the connection terminals is not functioning, and the printing step preferably comprises reporting to the host computer that the print data of the type correlated to the other printing device cannot be printed if the other printing device is determined to be not functioning.

Accordingly, when one of the printers is not functioning, the user can operate the host computer to know immediately when a problem occurs so that appropriate action can be taken.

Another aspect of the invention is a control method for a printing device which comprises two connection terminals enabling a daisy chain connection and which is connected to an external host computer through either one of the connection terminals, the control method comprising a determination step of determining if another printing device is connected to the other connection terminal; and a printing step of printing, based on the result of said determination, based on either one of at least two specific types of print data input from the host computer.

When a printer fails and the failed printer is replaced with another printer, the present invention enables simply connecting the replacement printer in the same way as the failed printer, thus enabling printing as desired while reducing the need for user configuration of the printer and simplifying recovery from printer problems.

According to another aspect of the present invention, a control program for controlling by means of a computer a printing device that has two connection terminals enabling connecting to an external host computer using a daisy chain connection according to at least one of the above described aspects of control methods, wherein the control program the control program causing the computer to execute a determination function for performing the determination step and a printing function for performing the printing step. This may be a control program for controlling by means of a computer a printing device that has two connection terminals enabling connection to an external host computer using a daisy chain connection, the control program causing the computer to execute: a determination function for determining if an external device such as the host device or another printing device is connected to the connection terminals for determining a connection status of the connection terminals; and a printing function for selecting, based on the result of said determination step, i.e. the determined connection status of the connection terminals, from among specific plural types of print data output from the host computer through the daisy chain connection the print data of the type of print data previously correlated to the connection status of the connection terminal and print the selected print data of the type of print data previously correlated to the connection status of the connection terminal.

Then, printing print data of the type correlated to how the connection terminals are connected can be enabled by simply connecting a printing device to the connection terminal.

This may also be a control program for controlling by means of a computer a printing device which comprises two connection terminals enabling a daisy chain connection and which is connected to an external host computer through either one of the connection terminals, the control program causing the computer to execute: a determination function for determining if another printing device is connected to the other connection terminal; and a printing function for printing, based on the result of said determination, based on one of at least two specific types of print data input from the host computer.

When a printer fails and the failed printer is replaced with another printer, the replacement printer can be simply replaced in the same way as the failed printer, thus enabling printing as desired while reducing the need for user configuration of the printer and simplifying recovery from printer problems.

Features, aspects, components and specific details of the structures as described above may be exchanged or combined to form further aspects optimized for the respective application. As far as those modifications are readily apparent for an expert skilled in the art they shall be disclosed implicitly by the above description without specifying explicitly every possible combination, for the sake of conciseness of the present description. Especially, it is to be noted that the present invention further provides a printing system comprising a host computer connected to a printing device as described in one of the above which is further connected to another printing device. The other printing device may also be a printing device as described in one of the above and, in particular, the two printing devices of the printing system may be preferably of the same type.

### * Effect of the invention

When a printer fails or maintenance is required and one printer is replaced with another printer, this aspect of the invention enables simply connecting the replacement printer in the same way as the failed printer, thus enabling printing as desired while reducing the need for user configuration of the printer and simplifying replacing a printer to recover from printer problems or for printer maintenance.

Other objects and attainments together with a fuller understanding of the invention will become apparent and appreciated by referring to the following description and claims taken in conjunction with the accompanying drawings.

### BRIEF DESCRIPTION OF THE DRAWINGS

FIG. 1 shows a schematic block diagram of a POS printing system according to a preferred embodiment of the invention.
FIG. 2 shows a schematic drawing of connection signal lines.
FIG. 3A shows a schematic drawing of a sample printout of a receipt and FIG. 3B schematically shows print data used for printing of a receipt.
FIG. 4A shows a schematic drawing of a sample printout of a coupon and FIG. 4B schematically shows print data used for printing of a coupon.
FIG. 5 shows a flow chart describing operation of a printer according to the invention.

### DESCRIPTION OF PREFERRED EMBODIMENTS

A preferred embodiment of the present invention is described below with reference to the accompanying figures.

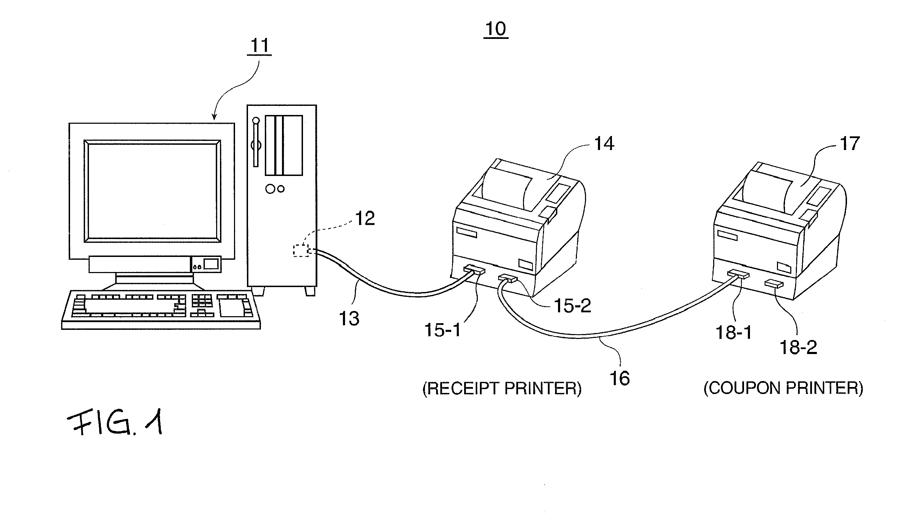

FIG. 1 shows a schematic block diagram of a POS printing system according to a preferred embodiment of the invention.

This POS printing system 10 includes a host computer 11, and a first serial interface connector 15-1 (connection terminal) of a first printer 14 is connected through a connector cable 13 to the serial interface connector 12 of the host computer 11. Note that the serial interface connector 12 of the host computer 11 can be connected and terminated by a terminating resistance not shown inside the host computer 11.

The first serial interface connector 18-1 (connection terminal) of a second printer 17 is connected through another connection cable 16 (cross connection cable) to a second serial interface connector 15-2 (connection terminal) of the first printer 14. The second serial interface connector 18-2 (connection terminal) of the second printer 17 is not used in this configuration, and can be connected to and terminated by a terminating resistance not shown inside the second printer 17. The first printer 14 and the second printer 17 are printers of the same type in this configuration. However, the present invention is not limited to such an embodiment, and the first printer 14 and the second printer 17 can be printers of a different type so as to form further embodiments of the present invention.

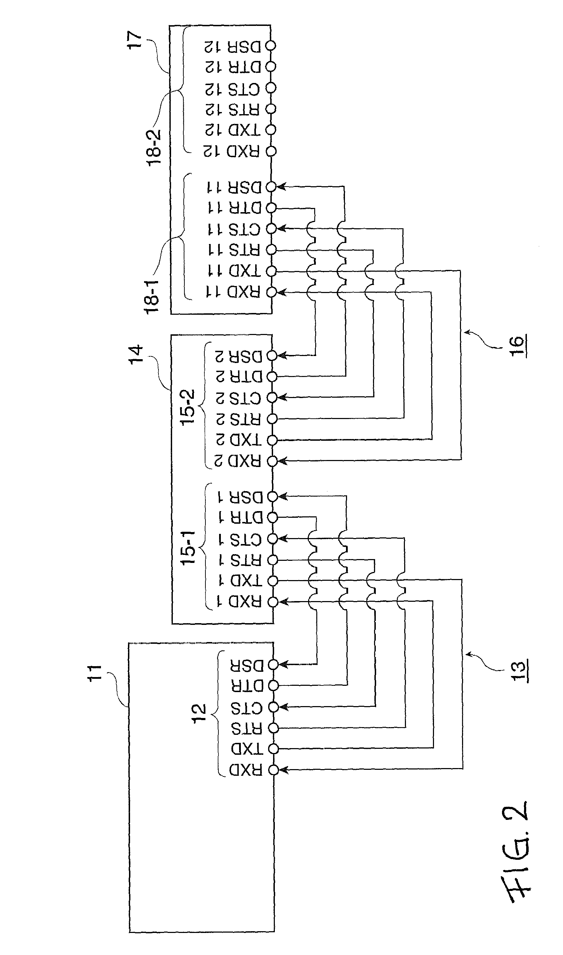

FIG. 2 shows a schematic drawing of the connection signal lines according to this embodiment of the invention.

As shown in FIG. 2, the serial interface connector 12 of the host computer 11 has an RXD (Receive Data) line RXD, a TXD (Transmit Data) line TXD, an RTS (Request To Send) line RTS, a CTS (Clear To Send) line CTS, a DTR (Data Terminal Ready) line DTR, and a DSR (Data Set Ready) line DSR.

The first serial interface connector 15-1 of the first printer 14 has a RXD line RXD1, TXD line TXD1, RTS line RTS1, CTS line CTS1, DTR line DTR1, and DSR line DSR1.

The second serial interface connector 15-2 of the first printer 14 has a RXD line RXD2, TXD line TXD2, RTS line RTS2, CTS line CTS2, DTR line DTR2, and DSR line DSR2.

Likewise, the first serial interface connector 18-1 of the second printer 17 has a RXD line RXD11, TXD line TXD11, RTS line RTS11, CTS line CTS11, DTR line DTR11, and DSR line DSR11.

In addition, the second serial interface connector 18-2 of the first printer 14 has a RXD line RXD12, TXD line TXD12, RTS line RTS12, CTS line CTS12, DTR line DTR12, and DSR line DSR12.

As also shown in FIG. 2, referring to the serial interface connector 12 of the host computer 11, the first serial interface connector 15-1 of the first printer 14, the second serial interface connector 15-2 of the first printer 14 and the first serial interface connector 18-1 of the second printer 17, each RXD line is connected to a TXD line, each RTS line is connected to a CTS line, and each DTR line is connected to a DSR line so that the overall signal bus is connected in a ring according to the direction of signal flow, that is, in a daisy chain.

The operation of this embodiment is described next.

In the embodiment described below the printer (host printer, e.g. the first printer 14 of Fig. 1) that has a device (the host computer 11 and another printer, e.g. the second printer 17) connected to both the first serial interface connector and the second serial interface connector operates as a receipt printer for printing receipts, and the printer (subordinate printer, e.g. the second printer 17 of Fig. 1) that has a printer connected to either its first serial interface connector or its second serial interface connector operates as a coupon printer for printing coupons.

The data for printing receipts and coupons is described next.

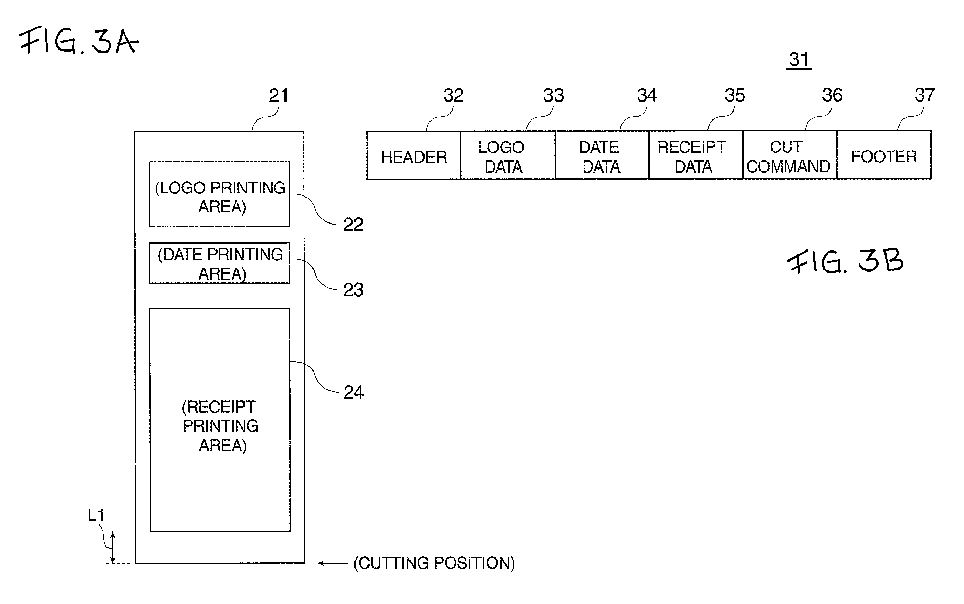

The printing of a receipt is described with reference to Figs. 3A and 3B. FIG. 3A shows a schematic drawing of a sample printout of a receipt. The receipt 21 has a logo printing area 22 for printing an image and/or text such as e.g. logo of a store using the POS printing system 10 on the receipt 21 within the logo printing area 22, a date printing area 23 for printing the date the receipt was issued on the receipt 21 within the date printing area 23, and a receipt printing area 24 for printing (displaying) receipt content on the receipt within the receipt printing area 24 such as e.g. the name, price, quantity, and/or other information for example about the purchased product or products.

The first printer 14 according to this embodiment of the invention also has an automatic paper cutter, and is configured to automatically cut each receipt by means of the automatic paper cutter at a specific distance L1 from the end of the receipt printing area 24 as shown in FIG. 3A.

FIG. 3B schematically shows the print data used for printing a receipt. The receipt printing data 31 includes a header 32 denoting the beginning of the print data, logo data 33 used for printing an image and/or text such as a e.g. logo in the logo printing area 22, date data 34 denoting the date the receipt is printed, receipt data 35 used for printing (and displaying) receipt content such as e.g. the name, price, quantity, and/or other information e.g. about the purchased product or products in the receipt printing area 24, a cut command 36 for cutting the receipt printing paper, which can be roll paper, at a specific cutting position, and a footer 37 denoting the end of the print data.

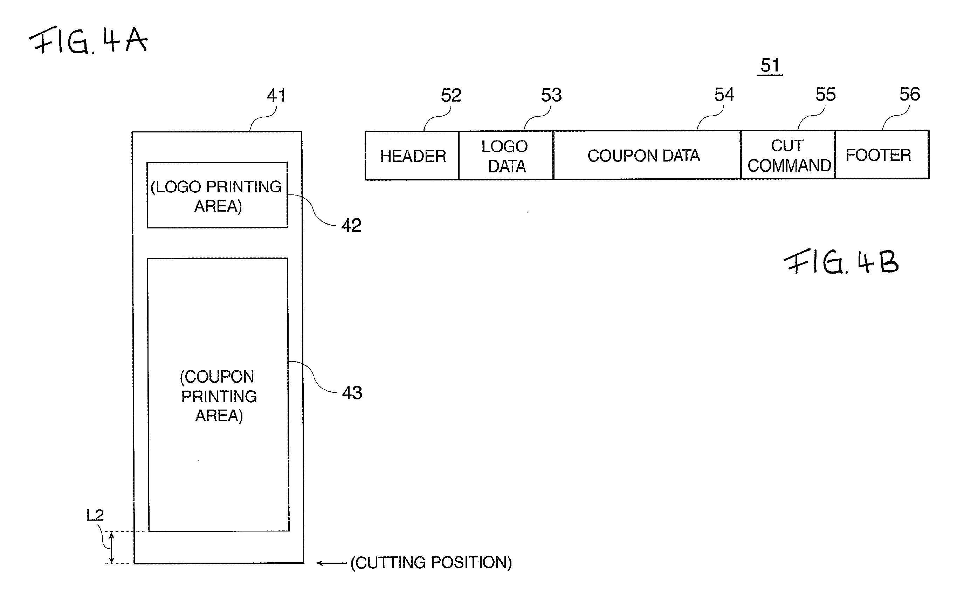

The printing of a coupon is described with reference to FIGS. 4A and 4B. FIG. 4A shows a schematic drawing of a sample printout of a coupon. The coupon 41 has a logo printing area 42 for printing an image and/or text such as e.g. a logo of the store that uses the POS printing system 10 on the coupon 41 within the logo printing area 42, and a coupon printing area 43 for printing coupon content on the coupon 41 within the coupon printing area 43 such as e.g. one or more different coupons.

The second printer 17 according to this embodiment of the invention also has an automatic paper cutter, and is configured to automatically cut each coupon by means of the automatic paper cutter at a specific distance L2 from the end of the coupon printing area 43 as shown in FIG. 4A.

FIG. 4B schematically shows the print data used for printing coupons. The coupon printing data 51 in this embodiment of the invention differs from the receipt printing data 31 in that date data does not follow the logo data 53, and if printing the date is required, the date can be included in the coupon data described below.

The coupon printing data 51 includes a header 52 denoting the beginning of the print data, logo data 53 used for printing an image and/or text such as e.g. a logo in the logo printing area 42, coupon data 54 used for printing and displaying coupon content such as one or more different coupons, a cut command 55 for cutting the coupon printing paper, which can be roll paper, at a specific cutting position, and a footer 56 denoting the end of the print data. Note that in order to prevent forgeries or to impart a sense of quality, the coupon printing paper in this embodiment of the invention may be thicker, higher quality paper than the receipt printing paper, and/or special paper bearing a hologram, for example.

The timing when the receipt printing data 31 and coupon printing data 51 are sent from the host computer 11 to the first printer 14 or second printer 17 is not specifically defined, and may vary in many ways according to the situation of the store using the POS printing system 10.

As a result, the first printer 14 and second printer 17 are always ready to print whenever data is sent thereto as long as the printer power is turned on.

The operation of a printer according to this embodiment of the invention is described next.

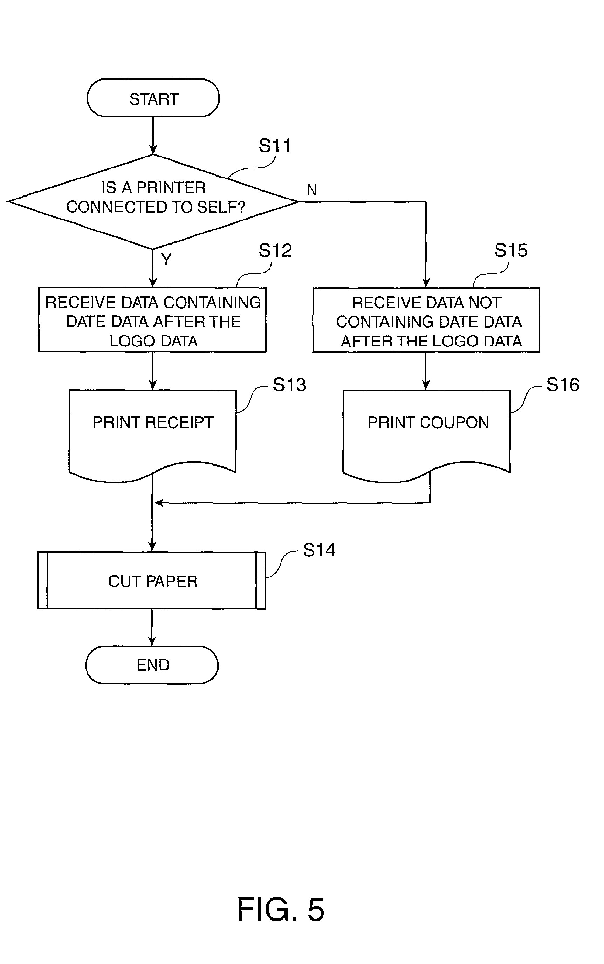

FIG. 5 shows a flow chart of the operating process a printer. The steps in this process are executed by a controller such as a microprocessor incorporated in the first printer 14 and second printer 17 e.g. executing firmware.

The operation of the first printer 14 is described next.

The controller of the first printer 14 automatically determines if a printer is also connected thereto in addition to the host computer 11, that is, if an external device (a host computer or a printer) is connected to each of the two connection terminals (step S11, connection status determination unit).

More specifically, the controller of the first printer 14 determines if any of the signal lines including RXD line RXD1, TXD line TXD1, RTS line RTS1, CTS line CTS1, DTR line DTR1, and DSR line DSR1 in the first serial interface connector 15-1, that is, its own serial interface connector, is HIGH. Then, an external device connected to the first serial interface connector 15-1 can be detected because at least one of the pins will be HIGH if a device is connected to the first serial interface connector 15-1.

If any of the signal lines including RXD line RXD1, TXD line TXD1, RTS line RTS1, CTS line CTS1, DTR line DTR1, and DSR line DSR1 is HIGH, the controller determines that a device is connected to the first serial interface connector 15-1. Note that the first printer 14 does not know if the connected device is the host computer or a printer.

The controller of the first printer 14 then determines if any of the signal lines including RXD line RXD2, TXD line TXD2, RTS line RTS2, CTS line CTS2, DTR line DTR2, and DSR line DSR2 in the second serial interface connector 15-2, that is, its own serial interface connector, is HIGH.

If any of the signal lines including RXD line RXD2, TXD line TXD2, RTS line RTS2, CTS line CTS2, DTR line DTR2, and DSR line DSR2 is HIGH, the controller determines that a device is connected to the second serial interface connector 15-2. Note that the first printer 14 does not know if the connected device is the host computer or a printer.

If a respective device is connected to each of the first serial interface connector 15-1 and second serial interface connector 15-2, the controller of the first printer 14 determines that the host computer 11 is connected to one connector and a printer is connected to the other connector, and therefore determines in step S11 that a printer is connected thereto (step S11 returns Yes). As a result, the first printer 14 recognizes that it is to function as a receipt printer.

Therefore, when print data contain ing the date data after the logo data (i.e. receipt printing data 31) is sent to either the first serial interface connector 15-1 or second serial interface connector 15-2 (the first serial interface connector 15-1 in this embodiment of the invention since the host computer 11 is connected to the first serial interface connector 15-1 in this embodiment), the controller of the first printer 14 receives the print data containing the date data after the logo data, that is, receives the receipt printing data 31 (step S12). However, when print data containing no date data after the logo data (i.e. coupon printing data 51) is sent to either the first serial interface connector 15-1 or second serial interface connector 15-2, the controller of the first printer 14 receives the print data that does not contain the date data after the logo data, that is, receives the coupon printing data 51, but as soon as it determines that the received data is not the receipt printing data 31, the controller controls sending the coupon printing data 51 to the second printer 17, that is, to the subordinate device connected thereto, and then deletes the data.

If the controller of the first printer 14 receives the print data containing the date data after the logo data, that is, receives the receipt printing data 31 (step S12), the controller of the first printer 14 then prints a receipt 21 as shown in FIG. 3A based on the received receipt printing data 31 (step S13), cuts the receipt printing paper at the specified cutting position based on the received cut command 36 (step S14), and then ends the process.

The controller of the first printer 14 thus is configured to select the data to be printed by the first printer 14 and the data to be sent to the second printer 17 from the received print data by verifying whether the print data is receipt printing data or coupon printing data.

The operation of the second printer 17 is described next.

The controller of the second printer 17 automatically determines if a printer is connected thereto in addition to the host computer 11, which is, if external devices (host computer or printer) are respectively connected to each of the two connection terminals (step S11).

More specifically, the controller of the second printer 17 determines if any of the signal lines including RXD line RXD11, TXD line TXD11, RTS line RTS11, CTS line CTS11, DTR line DTR11, and DSR line DSR11 in the first serial interface connector 18-1, that is, its own serial interface connector, is HIGH. This is because if a device is connected to the first serial interface connector 18-1, one of the pins will be HIGH.

If any of the signal lines including RXD line RXD11, TXD line TXD11, RTS line RTS11, CTS line CTS11, DTR line DTR11, and DSR line DSR11 is HIGH, the controller determines that a device is connected to the first serial interface connector 18-1. Note that the printer 17 does not know if the connected device is the host computer or a printer.

The controller of the second printer 17 then determines if any of the signal lines including RXD line RXD12, TXD line TXD12, RTS line RTS12, CTS line CTS12, DTR line DTR12, and DSR line DSR12 in the second serial interface connector 18-2, that is, its own serial interface connector, is HIGH. If any of the signal lines including RXD line RXD12, TXD line TXD12, RTS line RTS12, CTS line CTS12, DTR line DTR12, and DSR line DSR12 is HIGH, the controller determines that a device is connected to the second serial interface connector 18-2. Note that the printer 17 does not know whether the connected device is the host computer or a printer. When the system is configured as shown in FIG. 1, a termination resistance is internally connected to the second serial interface connector 18-2, and all signal buses are therefore LOW so that it can be determined that no external device is connected to the second serial interface connector 18-2.

Therefore, if the controller of the second printer 17 determines that a device is only connected to one of the first or second serial interface connector e.g. the first serial interface connector 18-1 as in the structure of Fig. 1, the controller of the second printer 17 determines in step S11 that a printer is not connected downstream there from (step S11 returns No). As a result, the second printer 17 recognizes that it is to function as a coupon printer.

When print data that does not contain date data after the logo data (i.e. coupon printing data 51) is then sent from the upstream device, which is the first printer 14 in this configuration, connected to either the first serial interface connector 18-1 or second serial interface connector 18-2 (the first serial interface connector 18-1 in this embodiment of the invention as shown in Fig. 1), the controller of the second printer 17 receives the print data that does not contain date data after the logo data, that is, receives the coupon printing data 51 (step S15). The controller of the second printer 17 can also receive the print data containing the date data after the logo data, that is, the receipt printing data 31if the first printer 14 is e.g. not configured to refrain from sending receipt printing data 31 to the second printer 17, but in this case, the second printer 17 discards the data as soon as it determines that the received data is not the coupon printing data 51. Note that instead of discarding this data, the print data may also be printed on the second printer 17 as controlled by the controller of the second printer 17.

When the controller of the second printer 17 receives the print data that does not contain date data after the logo data, that is, receives the coupon printing data 51 (S15), the controller of the second printer 17 then prints a coupon 41 as shown in FIG. 4A based on the received coupon printing data 51 (step S16), cuts the coupon printing paper at the specified position based on the received cut command 36 (step S14), and ends the process.

As described above, the controller of the second printer 17 selects the data to be printed by the second printer 17 from the received print data. The controller can also control the printer to print all of the received print data.

The foregoing description of operation applies when the first printer 14 functioning as a receipt printer and the second printer 17 functioning as a coupon printer are operating normally. If either printer fails, a printer of the same specifications can be simply connected in place of the printer that failed by reconnecting either connection cable 13 or connection cable 16, and the replacement printer thus connected will automatically recognize whether it is the receipt printer or the coupon printer and print accordingly.

Note, further, that if the host device, the first printer 14 in this example, is functioning normally but the subordinate device, the second printer 17 in this example, fails, all print data may be printed by the host device. That is, the first printer 14 in this example prints both receipts and coupons. Alternatively, the first printer 14 may be configured to print only receipts and report to the host computer that coupons cannot be printed. Alternatively, a printer busy status signal could be sent to the host computer using a particular signal line of the interface connector.

Yet further, if both printers fail at the same time, the two printers can both be replaced with printers of the same specifications and reconnected using the connection cable 13 and connection cable 16. One printer will thus function as a receipt printer, the other printer will function as a coupon printer, and operation can be quickly restored.

As described above, this embodiment of the invention enables each printer to automatically recognize its own connection state and function as a receipt printer or a coupon printer based on how it is connected. Setting DIP switches is therefore not necessary when replacing a printer due to a printer failure, for example, the user's job is thus simplified, only one type of reserve printer is needed in case of a printer failure, and unnecessarily storing printers that are not being used can be eliminated.

This embodiment describes a configuration in which one printer is used as a receipt printer and another printer is used as a coupon printer, but if the data format enables identifying what is to be printed, the invention is not limited to these two types of print data and can be used to print many types of print data.

For example, a printer 14 that has two connection terminals enabling connectingto an external host computer 11 using a daisy chain connection determines if an external device such as a host computer 11 or another printer 17 is connected to the connection terminals. The host computer 11 outputs specific plural types of print data through the daisy chain connection, and based on the result of this determination the printer prints the print data of the type correlated to the connection status of the connection terminals.

More specifically, if there are four types of print data and external devices are respectively connected to each of the connection terminals, the printer is configured to print three of the four types of print data. However, if an external device is connected to only one of the connection terminals, the printer is configured to print the remaining one of the four types of print data. As a result, one printer 14 having a host computer 11 and another printer 17 respectively connected as external devices to each of its connection terminals can print three of the four types of print data. The other printer 17, which has the one printer 14 connected to one of its connection terminals as an external device, prints the remaining one of four types of print data.

Accordingly, it is generally further possible to have a printing system in if there are N types of print data and external devices are respectively connected to each of the connection terminals of the printer, the printer is configured to print M (M < N) of the N types of print data. However, if an external device is connected to only one of the connection terminals of the printer, the printer is configured to print the remaining N - M of the N types of print data.

As a result, one printer 14 having a host computer 11 and another printer 17 respectively connected as external devices to each of its connection terminals can print M of the N types of print data. The other printer 17, which has the one printer 14 connected to one of its connection terminals as an external device, prints the remaining N - M of N types of print data.

Note, further, that a configuration connecting the second printer 17 to the second serial interface connector 15-2 of the first printer 14 is described above, but because the first serial interface connector 15-1 (18-1) and second serial interface connector 15-2 (18-2) are symmetrical, the same function can be achieved regardless of which connectors the host computer 11 or other printer are connected to.

The controller of the printer 14 used as the higher level device in the foregoing embodiment receives print data that is not addressed to the printer 14 (that is, coupon print data in the foregoing embodiment), and controls sending the print data to the printer 17 connected thereto as the subordinate device upon determining that the received print data is not intended for the first printer 14. If a bus type daisy chain connection such as a SCSI bus is used, print data that is not addressed to particular printer (such as the coupon printing data in the foregoing embodiment) may be simply deleted upon determining that the received print data is intended for another printer.

The invention being thus described, it will be obvious that it may be varied in many ways. Such variations are not to be regarded as a departure from the spirit and scope of the invention, and all such modifications as would be obvious to one skilled in the art are intended to be included within the scope of the following claims.

Features, aspects, components and specific details of the embodiments as described above may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. A printing device, comprising:
two connection terminals (15-1, 15-2; 18-1, 18-2), wherein each of the two connection terminals (15-1, 15-2; 18-1, 18-2) enables connection to an external device such as a host computer (11) or a second printing device (17; 14) using a daisy chain connection;
wherein the printing device (14; 17) is configured to determine if an external device such as the host computer (11) or the second printing device (17; 14) is connected to the connection terminals (15-1, 15-2; 18-1, 18-2) for determining a connection status of the connection terminals (15-1, 15-2; 18-1, 18-2); and
wherein the printing device (14; 17) is further configured to select from among specific plural types of print data (31, 51) output from the host computer (11) through the daisy chain connection the print data (31; 51) of the type of print data (31; 51) previously correlated to the connection status of the connection terminals (15-1, 15-2; 18-1, 18-2) based on the determined connection status of the connection terminals (15-1, 15-2; 18-1, 18-2) and print based on the selected print data of the type previously correlated to the connection status of the connection terminals (15-1, 15-2; 18-1, 18-2).

2. The printing device described in claim 1, wherein:
when external devices (11, 17) are respectively connected to the two connection terminals (15-1, 15-2), one of the external devices (11, 17) is the second printing device (17), and the second printing device (17) connected to either one of the connection terminals (15-1) is determined to be not functioning, the printing device (14) prints based on the plural types of print data (31, 51).

3. The printing device described in claim 1, wherein:
when external devices (11, 17) are respectively connected to the two connection terminals (15-1, 15-2), wherein one of the external devices (11, 17) is the host computer and one of the external devices (11, 17) is the other printing device (17), and the second printing device (17) connected to either one of the connection terminals (15-2) is determined to be not functioning, the printing device (14) reports to the host computer (11) that the print data (51) of the type correlated to the other printing device (17) cannot be printed.

4. A printing device, comprising:
two connection terminals (15-1- 15-2; 18-1; 18-2) enabling a daisy chain connection;
wherein the printing device (14; 17) is configured to determine if an external host computer (11) is connected through one of the connection terminals (15-1) and a second printing device (17; 14) is connected to another connection terminal (15-2; 18-1); and
wherein the printing device (14; 17) is configured to print, based on the result of said determination, based on one of plural specific types of print data (31; 51) input from the host computer (11).

5. The printing device described in at least one of claims 1 to 4, further comprising:
a connection status determination unit configured to determine if the second printing device (17; 14) is connected to one of the other connection terminals (18-1, 18-2; 15-1, 15-2) based on the signal level of a signal pin in the connection terminals (18-1, 18-2; 15-1, 15-2).

6. The printing device described in at least one of claims 1 to 5, wherein the plural types of print data (31, 51) comprise at least the types of receipt printing data (31) for receipt printing and coupon printing data (51) for coupon printing.

7. A printing device, comprising:
two connection terminals (15-1, 15-2; 18-1, 18-2),
wherein the printing device (14; 17) is configured to receive data from an external host device (11, 17; 14) through either one of the connection terminals (15-1, 15-2; 18-1, 18-2),
wherein the printing device (14; 17) is configured to send data to an external subordinate device (17) through the other connection terminal (15-2);
wherein the printing device (14; 17) is configured to determine if the subordinate device (17) is connected based on a signal received through the other connection terminal (15-2); and
wherein the printing device (14; 17) is configured to select and print data received from the host device (11) when a subordinate device (17) is determined to be connected.

8. The printing device described in claim 7, wherein:
when it is determined that the subordinate device (17) is connected, the printing device (14) selects specific data (51) from data received from the host device (11) and sends the selected data (51) to the subordinate device (17).

9. The printing device described in claim 7 or 8, wherein:
the printing device (14) is configured to print based on data received from the host device (11), when it is determined that the subordinate device (17) is not connected.

10. The printing device described in at least one of claims 7 to 9, wherein:
the host device (11, 17; 14) or the subordinate device (17) is a printing device (17) of the same type as the printing device (14; 17) and/or a printing device according to at least one of claims 1 to 6.

11. A control method for a printing device (14; 17) which comprises two connection terminals (15-1, 15-2; 18-1, 18-2), wherein each of the two connection terminals (15-1, 15-2; 18-1, 18-2) enables a connection to an external device such as a host computer (11) or a second printing device (17; 14) using a daisy chain connection, the control method comprising:
a determination step (S11) of determining if an external device such as the host device (11; 14) or the second printing device (17; 14) is connected to the connection terminals (15-1, 15-2; 18-1, 18-2) for determining a connection status of the connection terminals (15-1, 15-2; 18-1, 18-2); and
a printing step (S13; S16) of selecting from among specific plural types of print data (31, 51) output from the host computer (11) through the daisy chain connection the print data (31; 51) of the type of print data (31; 51) previously correlated to the connection status of the connection terminals (15-1, 15-2; 18-1, 18-2) based on the result of said determination step (S11) and printing based on the selected print data of the type previously correlated to the connection status of the connection terminals(15-1, 15-2; 18-1, 18-2).

12. The control method for a printing device described in claim 11, further comprising,
if it is determined in the determination step (S11) that external devices (11, 17) are respectively connected to the two connection terminals (15-1, 15-2), wherein one of the external devices (11, 17) is the second printing device (17),
a malfunction determination step of determining if the second printing device (17) connected to either one of the connection terminals (15-2) is not functioning;
wherein in the printing step (S13; S16) printing is performed based on the plural types of print data (31, 51) if the other printing device (17) is determined to be not functioning.

13. The control method for a printing device described in claim 11, further comprising,
if it is determined in the determination step (S11) that external devices (11, 17) are respectively connected to the two connection terminals (15-1, 15-2), wherein one of the external devices (11, 17) is the second printing device (17) and one of the external devices (11, 17) is the host computer (11),
a malfunction step of determining if the second printing device (17) connected to either one of the connection terminals (15-2) is not functioning;
wherein the printing step (S13; S16) comprises reporting to the host computer (11) that the print data (51) of the type correlated to the second printing device (17) cannot be printed if the second printing device (17) is determined to be not functioning.

14. A control method for a printing device (14; 17) which comprises two connection terminals (15-1, 15-2; 18-1, 18-2) enabling a daisy chain connection and is connected to an external host computer (11) through either one of the connection terminals (15-1, 15-2; 18-1, 18-2), the control method comprising:
a determination step (S11) of determining if a second printing device (17; 14) is connected to the other connection terminal (15-2); and
a printing step (S13; S16) of printing, based on the result of said determination step (S11), based on either one of at least two specific types of print data (31, 51) input from the host computer (11).

15. A control program for controlling by means of a computer a printing device (14; 17) which comprises two connection terminals (15-1, 15-2; 18-1, 18-2) enabling connecting to an external host computer (11) using a daisy chain connection according to a control method according to at least one of claims 11 to 14, wherein the control program causes the computer to execute:
a determination function for performing the determination step (S11); and
a printing function for performing the printing step (S13; 16).
